# EUROPÄISCHE PATENTANMELDUNG

(11) **EP 2 202 181 A1**
(43) Veröffentlichungstag der Anmeldung: **30.06.2010**
(21) Anmeldenummer: 09405226.3
(22) Anmeldetag: 18.12.2009
(51) Int. Cl.: B65G 17/38, B65G 35/04, F16G 13/10

(54) **Förderglied**

(30) Priorität: 23.12.2008 CH 20102008
(71) Anmelder: WRH Walter Reist Holding AG, 8272 Ermatingen (CH)
(72) Erfinder: Reist, Walter, 8340 Hinwil (CH)
(74) Vertreter: Müller, Markus Andreas

(57) **Zusammenfassung**

Ein Druckkörper (1) zum Übertragen von Druckkräften in einer Fördervorrichtung weist ein Glied (2) auf, wobei das Glied (2) an einem ersten Ende ein erstes Gelenkelement (3), gebildet durch einen Gelenkkörper (3) und an einem zweiten Ende ein zweites Gelenkelement (5), gebildet durch eine Gelenkpfanne (5) aufweist, und die Gelenkelemente (3, 5) zueinander korrespondierend geformt sind. Mindestens eines der Gelenkelemente (3, 5) ist mit einem Schutzelement (4) versehen.

## Beschreibung

Die Erfindung liegt auf dem Gebiet der Vorrichtungen zur Kraftübertragung oder zur Förderung und Transport von Gegenständen und bezieht sich auf einen Druckkörper und eine Fördereinheit gemäss dem Oberbegriff der entsprechenden unabhängigen Patentansprüche.

### STAND DER TECHNIK

Eine derartige Fördereinheit ist beispielsweise aus der CH 538 065 (US 3,757,514) bekannt. Eine Gliederkette weist kugelgelenkartig verbundene Glieder auf, mit jeweils einem Gelenkkörper und einer Gelenkpfanne. Damit ein Gelenkkörper in die Gelenkpfanne des anschliessenden Gliedes gesteckt werden kann, ist die Gelenkpfanne geschlitzt und somit spreizfähig. Um ein Aufspreizen der Gelenkpfanne zu verhindern, kann eine Manschette über sie gelegt werden. Die Manschette kann auch zur reibungsarmen Lagerung des Kettengliedes in einer Führung dienen. Die geschlitzten Gelenkpfannen und deren Möglichkeit des Aufspreizens haben einen höheren Verschleiss und Ermüdung des Materials zur Folge, was einen erhöhten Wartungs- und Überwachungsbedarf bedingt.

In der DE 31 21 835 A1 (GB 2 077 881) ist eine weitere Kugelgelenk-Gliederkette beschrieben, deren einzelne Kettenglieder entlang einer Axialebene in zwei Hälften geteilt sind, und nach dem Verbinden mit einem anschliessenden Kettenglied jeweils von Halteringen zusammengehalten werden.

Die CH 655 916 beschreibt eine Vorrichtung zum Herstellen einer Verbindung zwischen Stationen einer Anlage. Die Vorrichtung weist eine Gliederkette ähnlich der in der DE 31 21 835 A1 beschriebenen auf, die aber noch Durchlassöffnungen entlang der Längsachse der Kettenglieder aufweist. Durch diese Durchlassöffnungen ist ein elektrisches Kabel geführt, welches zur Kommunikation zwischen zwei Stationen entlang der Gliederkette dient. Anstelle des elektrischen Kabels ist auch ein Lichtleiter oder ein Hohlleiter erwähnt. Die Gliederkette ist an einem ersten Ende aus einem Magazin heraus förderbar. Das Kabel ist an diesem ersten Ende der Gliederkette fest mit einer Hauptstation verbunden. Am anderen Ende der Gliederkette respektive des Kabels ist ein Kopplungsorgan angeordnet, welches mit Zwischenstationen, die entlang eines Führungskanals angeordnet sind, jeweils verbindbar ist. Dazu wird die Gliederkette in eine Position gefördert, bei der das Kopplungsorgan sich bei der Zwischenstation befindet. So kann das Kabel mit der Zwischenstation verbunden werden. Es können auch mehrere Kopplungsorgane vorliegen, die in einem Abstand entlang der Gliederkette angeordnet sind. Die Fertigung einer solchen Gliederkette ist aufwendig.

Die WO 98/13281 A1 offenbart ein Kraftübertragungsmittel zur Übertragung von Schubkräften. Es besteht aus einer Folge von Übertragungselementen, welche an ihren Stirnflächen aneinanderstossen und einen ringartigen Kamm respektive eine ringartige Nut aufweisen, die gegeneinander verschwenkbar sind. Die Übertragungselemente können eine axiale Durchführung aufweisen, durch welche ein Verbindungsmittel, zur losen Verbindung der Übertragungselemente, insbesondere ein elektrisches Kabel geführt ist.

US 1,939,766 zeigt ein Kraftübertragungseinrichtung mit Druckkörpern, welche an einem zentralen Kabel aufgereiht sind, ebenso EP 1 059 462 A1.

Antriebe für Gelenkketten sind in DE 2 203 495 (durch ein umschlingendes Band) und EP 0 077 467 A2 (durch ein Zahnrad) offenbart.

In der DE 31 36 335 ist eine Antriebsvorrichtung zum Bewegen des Endbeschlages eines Sicherheitsgurtes beschrieben. An einem Kabel aufgereihte und optional mit Zähnen versehene Druckglieder werden durch einen Antrieb bewegt. Der Endbeschlag ist über eine Federung am letzten der Druckkörper und am Ende des Kabels befestigt.

### DARSTELLUNG DER ERFINDUNG

Es ist Aufgabe der Erfindung, ein Kettenglied bzw. einen Druckkörper und eine Fördereinheit zu schaffen, die einfach herzustellen und vielseitig einsetzbar sind.

Die Aufgabe wird gelöst durch einen Druckkörper und eine Fördereinheit gemäss den entsprechenden unabhängigen Patentansprüchen.

Ein Druckkörper zum Übertragen von Druckkräften in einer Fördervorrichtung weist also ein Glied auf, welches an einem ersten Ende ein erstes Gelenkelement, gebildet durch einen Gelenkkörper und an einem zweiten Ende ein zweites Gelenkelement, gebildet durch eine Gelenkpfanne aufweist, wobei die Gelenkelemente zueinander korrespondierend geformt sind. Dabei ist mindestens eines der Gelenkelemente mit einem Schutzelement versehen.

Das Schutzelement schützt die Gelenkelemente, also die Gelenkpfannen und Gelenkkörper, gegen Abnützung und Schläge, und verringert die Reibung an den Gelenken. Dies geschieht insbesondere durch Wahl der Materialpaarung zwischen Schutzelement und dem mit dem Schutzelement beweglich in Kontakt stehenden Gelenkelement. Das Material dieses Schutzelementes ist also auf ein Grundmaterial des Gliedes abgestimmt um die tribologischen Eigenschaften der Materialpaarung, beispielsweise bezüglich Abnützung und Selbstschmierung, optimal auszunützen um eine Reibungszahl von beispielsweise *f* ≤ 0.2 zu erzielen.

In einer bevorzugten Ausführungsform der Erfindung sind die Glieder aus Kunststoff gefertigt, und die Schutzelemente aus Metall, beispielsweise Messing oder Stahl, insbesondere ausscheidungsgehärtetem Stahl, dessen Oberfläche eine Rauheit Rₐ von 0.05 bis 0.2 bis 0.7 Mikrometern hat. Vorzugsweise sind die Schutzelemente durch Tiefziehen hergestellt. Die Oberfläche des Schutzelementes kann mittels spezifischen Verfahren verdichtet oder auch beispielsweise mit einer Flammspritzschicht beschichtet sein.

Die Druckkörper weisen vorzugsweise einstückige Glieder auf, an welchen die Gelenkpfannen und Gelenkkörper geformt sind. Die Schutzelemente können durch Behandlung der Oberfläche der Druckkörper gebildet werden, beispielsweise durch Verdichten der Oberfläche oder durch Beschichtung mit einem metallischen Stoff wie Chrom.

Die Schutzelemente können aber auch jeweils von den Gliedern der Druckkörper separate Körper sein, die auf die Druckkörper an den Gelenkkörpern aufgesteckt oder in die Gelenkpfannen eingelegt sind. Die Schutzelemente sind vorzugsweise über einen Gleitsitz oder Schiebesitz oder Festsitz mit Kraft-, Form-, oder Stoffschluss mit dem entsprechenden Gelenkelement verbunden.

Vorzugsweise weisen die einzelnen Partien des Druckkörpers jeweils eine rotationssymmetrische Form auf. Dadurch wird es möglich, im gleichen Herstellungsschritt im Inneren des Druckkörpers eine Durchgangsöffnung vorzusehen. Des weiteren können während der Fertigung des Druckkörpers scharfkantige oder eckige Übergänge verfeinert werden. Dies schützt ein optionales, vorzugsweise zentrisch und in axialer Richtung in den Durchgangsöffnungen verlegtes Kabel oder Seil.

Das Schutzelement weist vorzugsweise ebenfalls eine einfache rotationssymmetrische Form auf. Damit ist eine besonders einfache Serienherstellung aller Komponenten, beispielsweise durch Spritzgiessen der Glieder und Tiefziehen der Schutzelemente möglich. Das Schutzelement weist vorzugsweise, falls das Glied eine Durchgangsöffnung aufweist, ebenfalls eine in der Verlängerung der Durchgangsöffnung des jeweiligen Gliedes angeordnete Öffnung auf.

In einer bevorzugten Ausführungsform der Erfindung liegt ein Federelement vor, welches Kräfte zwischen benachbarten Druckkörpern, vor allem in axialer Richtung, aufnehmen und dabei einfedern und dämpfen kann. Das Federelement wirkt also zwischen zwei Druckkörpern und drückt diese voneinander weg. Das Federelement kann lose an den Druckkörpern anliegen, oder es kann in mindestens einem der benachbarten Druckkörper eingeklemmt oder in anderer Weise befestigt sein. Falls ein Verbindungsmittel wie ein Seil oder Kabel vorliegt, welches die Druckkörper zusammenhält, können so die Druckkörper und das als Zugmittel wirkende Verbindungsmittel gegeneinander verspannt werden. Auch falls kein Verbindungsmittel vorliegt, können eines oder mehrere Federelemente immer noch zur Federung und Dämpfung zwischen den Druckkörpern wirken. Dadurch werden Stösse abgefangen und wird die Lebensdauer der Druckkörper verlängert.

Zur Halterung des Federelementes bildet vorzugsweise eine Ausformung oder eine aufgesteckte Anschlagshülse an einer äusseren Partie der Druckkörper einen Sitz oder Aussensitz für ein erstes Ende eines Federelementes. Ein vorzugsweise zylindrischer Innensitz im Bereich der Gelenkpfanne im Druckkörper bildet eine Lagerung eines zweiten Endes des Federelementes. Das Federelement umschliesst vorzugsweise einen zwischen den beiden Gelenkelementen liegenden Abschnitt eines Druckkörpers, beispielsweise in einer im Wesentlichen rotationssymmetrischen Anordnung.

Miteinander verkettete, insbesondere durch ein Verbindungsmittel zusammengehaltene Druckkörper bilden eine Fördereinheit. Das zur Aufnahme von Zugkräften ausgelegte Verbindungsmittel oder Zugmittel ist durch die Durchgangsöffnungen der Druckkörper geführt und an einem ersten Glied und an einem letzten Glied der Fördereinheit zur Aufnahme von Zugkräften befestigt.

Mindestens ein Federelement verspannt die Druckkörper gegen das Verbindungsmittel. Dadurch wird, wenn die Fördereinheit durch einen Antrieb angetrieben wird, der mit einer Verzahnung an den Druckkörpern angreift, der Eingriff der Verzahnung verbessert, d.h. besser synchronisiert als bei teilweise lose aufeinanderfolgenden Druckkörpern. Dadurch wiederum werden Vibrationen und Laufgeräusche wie Rattern verringert. Die bevorzugte rotationssymmetrische Form der Distanzierungskörper ist gut für einen Antrieb der Fördereinheit geeignet.

Vorzugsweise ist die Durchgangsöffnung im Bereich der ersten und/oder der zweiten Gelenkelemente aufgeweitet. Diese Aufweitung oder Verbreiterung kann beispielsweise durch eine konische Oberfläche realisiert sein. Dabei ist der Übergang von einem solchen Durchführungskonus zur Durchgangsöffnung vorzugsweise abgerundet. Durch diese Aufweitung und die Abrundung wird ein Knicken des Verbindungsmittels bei zueinander angewinkelten Gliedern reduziert.

In einer bevorzugten Ausführungsform einer Fördereinheit weist mindestens ein Druckkörper einen Mitnehmer oder ein Mitnahmeglied zum Fördern oder Antreiben von weiteren Gegenständen auf oder ist der Mitnehmer am Druckkörper befestigt. Dazu kann am Mitnahmeglied oder durch das Mitnahmeglied angetrieben, ein Greifer oder ein Träger angebracht sein. Der Draht oder das Kabel kann beispielsweise für eine elektrische Versorgung oder für Kommunikationssignale verwendet werden.

Die Fördereinheit mit dem Federelement kann auch ohne das Schutzelement ausgeführt sein.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Längsschnitt eines Druckkörpers einer Fördereinheit;
- Figur 2: ein Schutzschild für den Druckkörper; und
- Figur 3: eine Fördereinheit.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

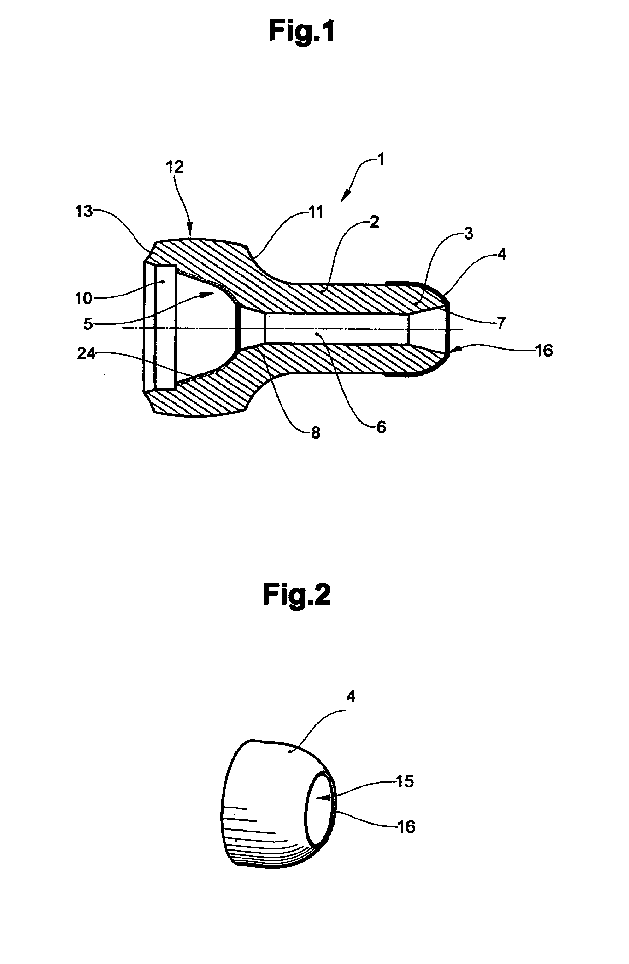

**Figur 1** zeigt einen rotationssymmetrischen Druckkörper 1, aufweisend ein zapfenförmiges Glied 2 mit einem konvexen Gelenkkörper 3 und einer konkaven Gelenkpfanne 5. Der Gelenkkörper 3 ist versehen mit einem Schutzelement 4. Zusätzlich oder alternativ kann auch die Gelenkpfanne 5 mit einem inneren Schutzelement 24 (strichliert gezeichnet) versehen sein. Dabei passt der nach aussen bombierte Gelenkkörper 3 formschlüssig in die nach innen bombierte Gelenkpfanne 5 eines benachbarten Druckkörpers 1.

Die Verdickung weist im dickeren Bereich eine rotationssymmetrische, vorzugsweise bombierte, Fläche, im Folgenden Zahnfläche 12 genannt, auf. An einen vorderen Schulterbereich 11 geht die Zahnfläche 12 in den dünneren Teil des Gliedes 2 über, der zum Gelenkkörper 3 führt, und an einem hinteren Schulterbereich 13 in die Gelenkpfanne 5. Die beiden Schulterbereiche 11, 13 weisen vorzugsweise teilweise ein spiegelbildliches Profil auf und bilden zusammen mit der Zahnfläche 12 einen Angriffskörper, an welchem ein Zahnrad oder eine andere Fördereinrichtung zum Antreiben der Fördereinheit 17 angreifen kann.

Eine in axialer Richtung verlaufende Durchgangsöffnung 6 weist vorzugsweise an beiden Seiten, d.h. beim Gelenkkörper 3 und bei der Gelenkpfanne 5, eine konusförmige vordere respektive hintere Erweiterung 7, 8 auf. Diese führt ein Kabel oder ein Zugseil so dass bei Umlenkungsbewegungen der Gelenke das Kabel nicht geknickt und verletzt wird.

Die Gelenkpfanne 5 weist vorzugsweise einen Innensitz 10 für ein Federelement 9 auf. Die Gelenkpfanne 5 ist im Bereich einer Verdickung des Gliedes 2 ausgebildet, an welcher ein Antrieb eingreifen kann. Es ist an einer der Gelenkpfanne 5 gegenüberliegenden Schulter 11 an der Aussenseite dieser Verdickung eine Anschlagshülse 22 zur Abstützung eines Federelementes 9 aufgesteckt. Alternativ kann auch ein Sitz oder Aussensitz zur Abstützung eines Federelementes 9 einstückig an der Verdickung ausgeformt sein. Der Aussensitz oder die Anschlagshülse 22 bildet eine im wesentlichen senkrecht zur Längsachse des Druckkörpers liegende Stützfläche.

Masse für einen Druckkörper sind beispielsweise eine Länge von 50 mm und ein grösster Durchmesser von 33 mm. Die Grösse kann in anderen Ausführungsformen aber auch halb oder doppelt so gross sein.

**Figur 2** zeigt ein Schutzelement 4 in Form eines bombierten Schutzschildes mit einer optionalen in axialer Richtung verlaufenden Öffnung 15 für eine Kabeldurchführung. Das Schutzelement 4 passt formschlüssig auf die Aussenseite des Gelenkkörpers 3 sowie vorzugsweise auch auf die Innenseite der Gelenkpfanne 5. Eine innere Lochkante der Öffnung 15 weist eine abgerundete Lochkante 16 aus, die ein Verletzen eines Verbindungsmittels oder Zugmittels verhindert. Zwischen dem Schutzelement 4 und dem entsprechenden Gelenkelement 3, 5 herrscht nach dem Aufstecken respektive Einstecken vorzugsweise eine Flächenpressung.

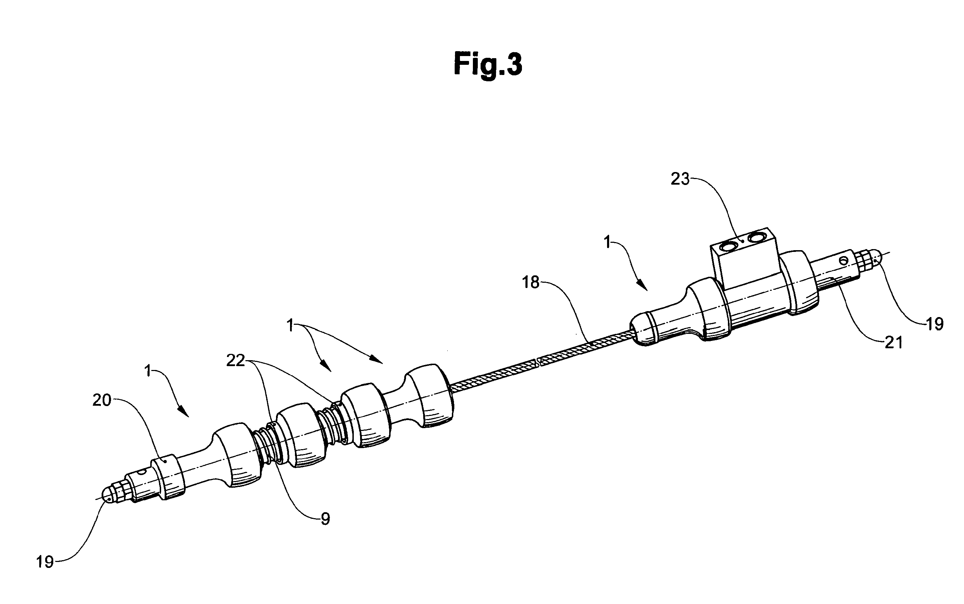

**Figur 3** zeigt eine Fördereinheit 17 mit mehreren aneinander gereihten Druckkörpern 1. Ein Verbindungsmittel 18, beispielsweise ein Drahtseil oder ein Kunststoffseil, ist durch die Durchgangsöffnungen 6 der Glieder 2 geführt und jeweils mittels eines Befestigungsmittels 19 an einem ersten Glied 20 und einem letzten Glied 21 der Fördereinheit 17 fixiert. Das Verbindungsmittel 18 ist durch Federelemente 9 vorgespannt, so dass die Druckkörper 1 der Fördereinheit 17 gegeneinander gedrückt werden. Dadurch wird eine Stabilisierung der Fördereinheit und eine verbesserte und konstante Eingriffsverzahnung für einen Antrieb erreicht. Die Federelemente 9 sind beispielsweise, wie eingezeichnet, Spiralfedern, oder aber Hülsen aus einem elastischen Material wie Gummi oder einem Kunststoff. Die Federelemente 9 sind an einem Ende im Innensitz 10 eines Druckkörpers 1 eingesteckt. Am anderen Ende liegen sie auf einem Sitz oder Aussensitz oder einer Anschlaghülse 22 auf, so dass sie nicht durch die vordere Schulter 11 aufgeweitet werden. Der Innensitz 10 bewirkt zusammen mit einem eingesetzten Federelement 9 eine Versteifung der Fördereinheit 17, wodurch unter Umständen über kurze Strecken und abhängig von der Druckbelastung der Fördereinheit auf eine äussere Führung der Fördereinheit verzichtet werden kann.

In der **Figur 3** ist nur ein Federelement 9 als Spannmittel eingezeichnet, es können aber auch mehrere Federelemente 9 entlang der Fördereinheit 17 angeordnet werden, entweder nacheinander, oder auf die Länge der Fördereinheit 17 verteilt, oder zwischen allen Druckkörpern 1. Am Ende der Fördereinheit 17 kann beispielsweise ein Mitnehmer angeordnet sein, an welchem Teile befestigt werden können.

Eine Vorspannung kann auch oder zusätzlich erzeugt werden, indem das Verbindungsmittel 18 elastisch ist, oder indem das Zugmittel 18 mit einer elastischen Befestigung mit dem ersten oder letzten Glied 20, 21 verbunden wird. Leichte Längenänderungen des Zugmittels 18, welche beim Krümmen der Fördereinheit 17 entstehen können, werden durch diese Elastizität ausgeglichen.

### BEZUGSZEICHENLISTE

- 1: Druckkörper
- 2: Glied
- 3: Gelenkkörper
- 4: Schutzelement
- 5: Gelenkpfanne
- 6: Durchgangsöffnung
- 7: konusförmige Erweiterung (vorne)
- 8: konusförmige Erweiterung (hinten)
- 9: Spannelement, Feder
- 10: Aufnahme für Feder, Innensitz
- 11: vordere Schulter
- 12: Zahndurchmesser
- 13: hintere Schulter
- 15: Durchgangsöffnung von Schutzelement
- 16: innere Lochkante
- 17: Fördereinheit
- 18: Verbindungsmittel, Seil
- 19: Befestigungsmittel
- 20: erstes Glied
- 21: letztes Glied
- 22: Anschlagshülse
- 23: Mitnehmer
- 24: inneres Schutzelement

## Patentansprüche

1. Ein Druckkörper (1) zum Übertragen von Druckkräften in einer Fördervorrichtung, wobei der Druckkörper (1) ein Glied (2) aufweist, welches an einem ersten Ende ein erstes Gelenkelement (3), gebildet durch einen Gelenkkörper (3) und an einem zweiten Ende ein zweites Gelenkelement (5), gebildet durch eine Gelenkpfanne (5) aufweist, wobei die Gelenkelemente (3, 5) zueinander korrespondierend geformt sind, **dadurch gekennzeichnet, dass** mindestens eines der Gelenkelemente (3, 5) mit einem Schutzelement (4) zum Schutz der Gelenkelemente (3, 5) und zur Verringerung der Reibung zwischen den Gelenkelementen (3, 5) von aufeinanderfolgenden Druckkörpern (1) versehen ist.

2. Der Druckkörper (1) gemäss Anspruch 1, wobei ein Grundmaterial des Gliedes (2) ein Kunststoff ist.

3. Der Druckkörper (1) gemäss Anspruch 1, wobei ein Grundmaterial des Gliedes (2) ein metallischer Werkstoff ist.

4. Der Druckkörper (1) gemäss einem der Ansprüche 1 bis 3, wobei der Druckkörper (1) eine rotationssymmetrische Form aufweist.

5. Der Druckkörper (1) gemäss einem der bisherigen Ansprüche, wobei die Oberfläche des Schutzelementes (4) verdichtet ist.

6. Der Druckkörper (1) gemäss einem der bisherigen Ansprüche, wobei die Oberfläche des Schutzelementes (4) eine Rauheit von 0.05 Mikrometer bis 0.7 Mikrometer aufweist.

7. Der Druckkörper (1) gemäss einem der bisherigen Ansprüche, wobei das Glied (2) einstückig ist und die Gelenkelemente (3, 5) am Glied (2) ausgeformt sind.

8. Der Druckkörper (1) gemäss einem der bisherigen Ansprüche, wobei das Schutzelement (4) durch eine Beschichtung des entsprechenden Gelenkelementes (3, 5) gebildet ist.

9. Der Druckkörper (1) gemäss einem der Ansprüche 1 bis 8, wobei das Schutzelement (4) ein vom Glied (2) separater Körper ist, insbesondere ein metallischer Körper.

10. Der Druckkörper (1) gemäss Anspruch 9, wobei das Schutzelement (4) mittels Form-, Stoff- oder Kraftschluss, insbesondere einem Gleitsitz oder Schiebesitz oder Festsitz, mit dem entsprechenden Gelenkelement (3, 5) verbunden ist.

11. Der Druckkörper (1) gemäss einem der Ansprüche 9 bis 10, wobei das Glied (1) eine axiale Durchgangsöffnung (6) aufweist, und das Schutzelement (4) eine in der Verlängerung dieser Durchgangsöffnung (6) angeordnete Öffnung (15) aufweist.

12. Der Druckkörper (1) gemäss Anspruch 11, wobei eine innere Lochkante (16) der Öffnung des Schutzelementes (4) eine Abrundung oder eine Anfasung aufweist.

13. Der Druckkörper (1) gemäss einem der bisherigen Ansprüche, wobei an der Aussenseite und/oder an der Innenseite des Druckkörpers (1) ein Sitz (10, 22) für ein Federelement (9) angeordnet ist.

14. Der Druckkörper (1) gemäss Anspruch 13, wobei im Bereich der Gelenkpfanne (5) ein Innensitz (10) zur Aufnahme des Federelementes (9) ausgeformt ist.

15. Der Druckkörper (1) gemäss Anspruch 13 oder 14, wobei die Gelenkpfanne (5) im Bereich einer Verdickung des Gliedes (2) ausgebildet ist, und an einer der Gelenkpfanne (5) gegenüberliegenden Schulter (11) an der Aussenseite dieser Verdickung ein Sitz zur Abstützung eines Federelementes (9) ausgeformt ist oder eine Anschlagshülse (22) zur Abstützung eines Federelementes (9) aufgesteckt ist.
